# DEMANDE DE BREVET EUROPEEN

(11) **EP 1 300 081 A2**
(43) Date de publication de la demande: **09.04.2003**
(21) Numéro de dépôt: 02356191.3
(22) Date de dépôt: 02.10.2002
(51) Int. Cl.: A22B 5/00, A01K 11/00

(54) **Procédé et dispositif pour le traçage d'animaux de boucherie**

(30) Priorité: 02.10.2001 FR 0112801
(71) Demandeur: Humbert, Georges, 74370 Metz Tessy (FR)
(72) Inventeur: Humbert, Georges, 74370 Metz Tessy (FR)
(74) Mandataire: Poncet, Jean-François

(57) **Abrégé**

Selon l'invention, on attache à chaque animal une boucle électronique (15), on assure une lecture optique des quatre derniers chiffres portés sur une étiquette d'identification (1) normalisée portée par l'animal, on assure une lecture automatique d'un lot de documents d'accompagnement (9), on assure un affichage sur un écran (12) de la liste des numéros d'identification ordonnés selon les suites de quatre derniers chiffres de numéros d'identification, et on permet à l'opérateur de faire un rapprochement entre l'animal et le document d'accompagnement par simple lecture sur l'écran (12) et repérage du numéro d'identification correspondant à la suite des quatre derniers chiffres qui a été lue sur l'étiquette d'identification (1) normalisée. Un dispositif électronique permet alors d'enregistrer à distance sur la boucle électronique (15) le numéro d'identification complet de l'animal considéré. On facilite ainsi le rapprochement des animaux et de leurs documents d'accompagnement, et on facilite considérablement les tris ultérieurs des animaux en permettant la lecture à distance de leur numéro d'identification.

## Description

La présente invention concerne les moyens permettant d'identifier les animaux dans les centres d'allotement ou dans les abattoirs, pour en effectuer le contrôle et le tri.

L'identification des animaux sert à assurer un suivi sanitaire du bétail, de façon à apporter des garanties au consommateur sur l'origine de l'animal et sur la qualité du produit. L'identification est également nécessaire pour permettre l'apposition de signes de qualité tel que labels, marques, certifications.

Actuellement, l'identification officielle des animaux se fait au moyen de deux étiquettes d'identification, appelées boucles, qui sont attachées aux oreilles de chaque animal, et au moyen de documents d'accompagnement (DAB) qui doivent accompagner l'animal dans tous ses déplacements.

Par exemple, dans les sept jours suivant sa naissance, un veau doit être identifié par deux boucles plastiques normalisées identiques, une à chaque oreille.

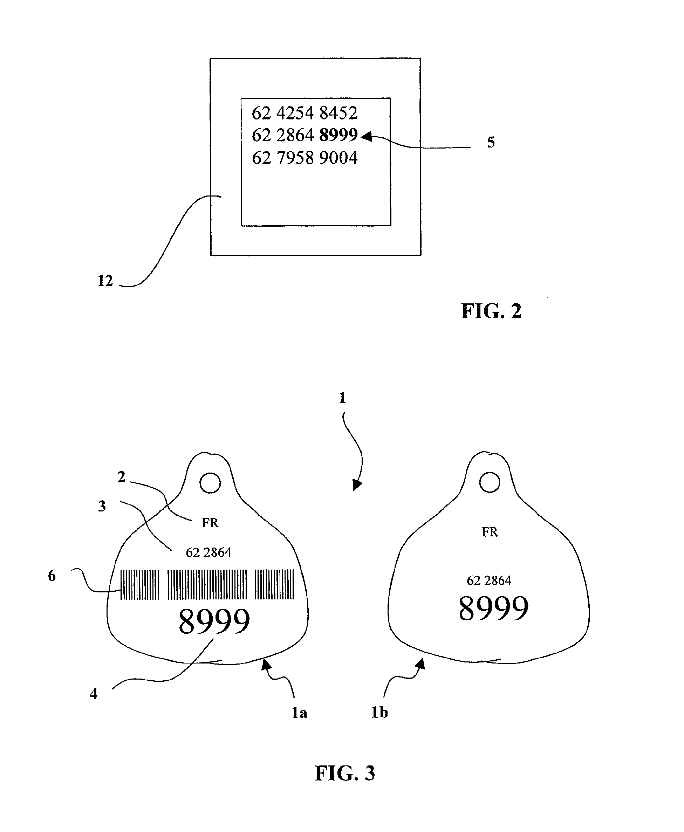

Chaque boucle normalisée 1 est composée d'une partie mâle 1a et d'une partie femelle 1b. On a illustré sur la figure 3 les parties mâle et femelle d'une boucle normalisée. La partie mâle la porte le code pays 2, un numéro d'identification national à dix chiffres dont les six premiers chiffres 3 sont généralement écrits en plus petits caractères et les quatre derniers chiffres 4 sont écrits en plus gros caractères pour en faciliter la lecture. Les deux premiers chiffres du numéro d'identification national correspondent au département, les quatre derniers chiffres 4 étant le numéro de travail. La partie femelle 1b porte également le code pays et le numéro d'identification national. La partie mâle la porte en outre un code à barres 6 contenant les mêmes informations de code pays et de numéro d'identification national.

A chaque animal est également associé un document d'accompagnement (DAB) qui contient notamment le numéro d'identification national, d'une part écrit en clair, et d'autre part écrit sous forme qui peut être lue par un dispositif de lecture automatique. Généralement, la lecture automatique est assurée par le fait que le numéro d'identification national est codé sous forme de code à barres lisible par des moyens de lecture optique par balayage de rayon laser. Le document d'accompagnement comprend d'autres informations sur l'identité, le statut sanitaire, les primes, les détenteurs successifs de l'animal et éventuellement son état civil. Il accompagne obligatoirement tous les animaux de plus d'un mois qui circulent. Un animal de boucherie ne peut être abattu que s'il arrive à l'abattoir accompagné de son document d'accompagnement.

Identifier les animaux dans les centres d'allotement ou dans les abattoirs nécessite de réaliser une lecture de l'étiquette d'identification portée par les oreilles de l'animal. Mais cette lecture est difficile car l'étiquette est de petite taille, de sorte que les inscriptions sont petites. De plus l'étiquette est soumise à diverses agressions au cours de la vie de l'animal, qui la dégradent et en rendent la lecture de plus en plus difficile voire impossible par des moyens automatiques. Seuls les quatre derniers chiffres grossis sont facilement lisibles. Le code à barres est souvent illisible, et de plus les animaux bougent.

Malgré ces difficultés de lecture, il est indispensable de contrôler de manière certaine l'identité des informations portées par l'étiquette d'identification et par le document d'accompagnement. Et cette opération doit être renouvelée à chaque étape de contrôle. La difficulté de lecture entraîne un risque d'erreurs dans l'identification des animaux, erreurs qu'il est essentiel d'éviter.

La difficulté de lecture entraîne en outre une forte baisse de rendement des opérations futures tels que transport, prise de poids, engraissement, abattage.

Le document WO 01 52636 A décrit un système comprenant une base de données pour le traçage d'animaux de boucherie, une carte à code à barres, un badge électronique d'identification radiofréquence attaché à chaque animal, et une étiquette d'identification visuelle. Le document n'enseigne pas une façon complète d'entrer aisément les informations dans le badge électronique et dans l'étiquette d'identification visuelle, et d'assurer leur cohérence avec la base de données.

Les documents US 5 803 906 A et US 5 478 990 A décrivent des dispositifs similaires de traçage d'animaux, mais aucun ne décrit la façon complète d'entrer les informations sur les moyens d'identification portés par l'animal, ni la façon d'assurer la cohérence avec la base de données.

Le problème proposé par la présente invention est de concevoir de nouveaux moyens permettant de simplifier considérablement l'identification des animaux, et d'assurer de manière fiable un marquage de l'animal par des moyens à lecture automatique pour les opérations ultérieures.

L'invention a également pour but d'accélérer le processus d'identification et les identifications ultérieures au cours des opérations successives effectuées sur l'animal.

Pour atteindre ces buts ainsi que d'autres, l'invention prévoit un procédé de traçage d'animaux de boucherie, dans lequel chaque animal destiné à l'abattoir porte au moins une étiquette d'identification qui lui est attachée et qui contient notamment un numéro d'identification écrit en clair sous forme lisible, et chaque animal est associé à un document d'accompagnement qui contient notamment ledit numéro d'identification écrit en clair et écrit sous forme qui peut être lue par un dispositif de lecture automatique ; selon l'invention, on prévoit les étapes suivantes :
a) on attache à chaque animal une boucle électronique permettant une écriture et une lecture à distance du numéro d'identification,
b) on lit les numéros d'identification des documents d'accompagnement reçus et on les enregistre dans une mémoire de tri en signalant les éventuels doublons de nombres formés par les suites de quatre derniers chiffres,
c) on présente les animaux à trier un à un,
d) on identifie visuellement les quatre derniers chiffres du numéro d'identification porté par l'étiquette d'identification de l'animal,
e) on établit une correspondance avec l'un des numéros d'identification enregistrés dans la mémoire de tri,
f) en cas de correspondance, on enregistre le numéro d'identification complet dans la boucle électronique attachée à l'animal, et on efface ce numéro dans la mémoire de tri.

Selon un mode de réalisation préféré, pour établir la correspondance, on visualise sur un dispositif de visualisation une liste ordonnée des nombres formés par les suites de quatre derniers chiffres des numéros d'identification enregistrés dans la mémoire de tri, et on sélectionne la suite de quatre derniers chiffres qui est identique à la suite identifiée sur l'étiquette d'identification de l'animal.

L'invention prévoit également un dispositif de traçage d'animaux de boucherie, pour la mise en oeuvre d'un procédé tel que défini ci-dessus. Ce dispositif comprend :
- un dispositif d'entrée des numéros d'identification lus sur les documents d'accompagnement,
- une mémoire de tri pour enregistrer une liste de numéros d'identification,
- un dispositif de visualisation pour afficher des numéros d'identification en tout ou partie,
- un dispositif d'entrée-sortie pour communiquer un signal de reconnaissance de numéros d'identification,
- une unité de calcul connectée au dispositif de lecture, à la mémoire de tri, au dispositif de visualisation et au dispositif d'entrée-sortie,
- des boucles électroniques, conformées pour être mécaniquement attachées chacune de manière permanente à un animal respectif, et comportant une mémoire de boucle et un dispositif de communication embarqué permettant une écriture et une lecture à distance du contenu de la mémoire de boucle,
- un dispositif de communication fixe, adapté pour recevoir de l'unité de calcul les signaux relatifs à un numéro d'identification et pour les transmettre au dispositif de communication embarqué pour enregistrer ledit numéro d'identification dans la mémoire de boucle,
- une mémoire centrale, connectée à l'unité de calcul, et contenant un programme qui pilote l'unité de calcul et ses périphériques selon ledit procédé.

De préférence, le programme enregistré affiche sur le dispositif de visualisation une liste ordonnée des nombres formés par les suites de quatre derniers chiffres des numéros d'identification enregistrés en mémoire de tri, permet de déplacer à l'aide du dispositif d'entrée-sortie un curseur virtuel sur l'un des nombres de la liste ordonnée, et permet de sélectionner ledit nombre pour provoquer son effacement de la liste et son enregistrement dans la mémoire de boucle.

Selon un mode de réalisation avantageux, le dispositif comprend en outre un dispositif d'entrée à lecture automatique des documents d'accompagnement, communiquant à l'unité de calcul les numéros d'identification lus à enregistrer dans la mémoire de tri.

De préférence, le dispositif d'entrée est adapté pour lire un lot d'entrée de documents d'accompagnement et pour trier les documents d'accompagnement en sortie de lecture en un lot de documents d'accompagnement à lecture défectueuse et plusieurs lots de sortie de documents d'accompagnement choisis par l'opérateur.

D'autres objets, caractéristiques et avantages de la présente invention ressortiront de la description suivante de modes de réalisation particuliers, faite en relation avec les figures jointes, parmi lesquelles:
- la figure 1 est une vue schématique illustrant les constituants essentiels d'un dispositif selon un mode de réalisation de la présente invention ;
- la figure 2 illustre les informations portées sur le dispositif de visualisation en cours de fonctionnement ; et
- la figure 3 représente les parties mâle et femelle d'une étiquette d'identification normalisée.

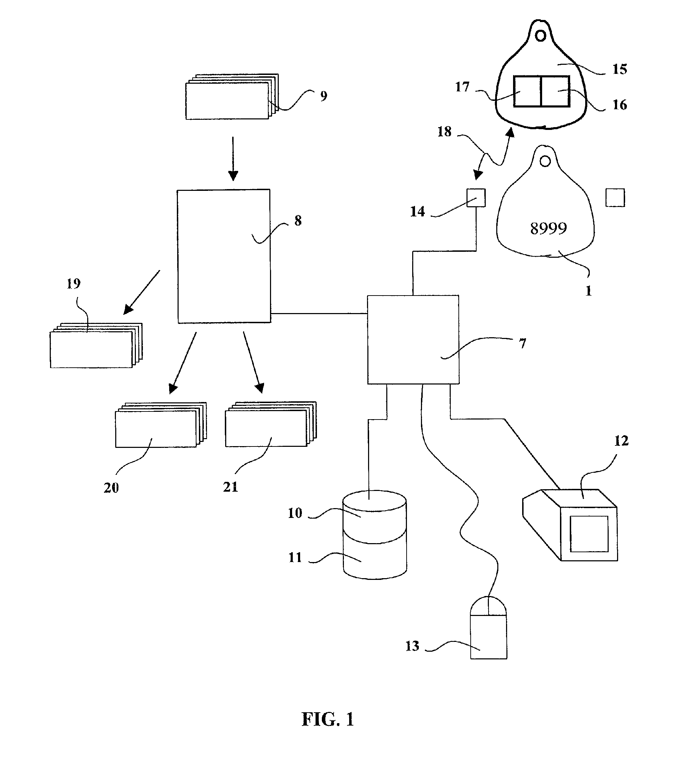

Dans le mode de réalisation illustré sur la figure 1, qui peut être implémenté à partir d'un micro-ordinateur, le dispositif comprend une unité de calcul 7, par exemple de type microprocesseur ou unité centrale de micro-ordinateur, associée à des périphériques comprenant notamment les périphériques décrits ci-après.

Un premier périphérique est un dispositif d'entrée 8, permettant d'envoyer à l'unité de calcul 7 les numéros d'identification lus sur les documents d'accompagnement 9 qui sont présentés.

Dans un mode de réalisation simplifié, le dispositif d'entrée 8 est un clavier par lequel l'opérateur peut saisir le numéro d'identification qu'il lit visuellement sur le document d'accompagnement. De préférence, le dispositif d'entrée 8 comprend un dispositif automatique de lecture optique de codes à barres, qui effectue la lecture optique des numéros d'identification sous forme de code à barres sur le document d'accompagnement.

Un second périphérique comprend une mémoire de tri 10, connectée à l'unité de calcul 7, et adaptée pour enregistrer une liste de numéros d'identification. Le second périphérique comprend également une mémoire centrale 11 dans laquelle peut être enregistré un programme définissant les étapes de fonctionnement du dispositif.

Un autre périphérique est un dispositif de visualisation 12, par exemple un écran cathodique, permettant d'afficher les numéros d'identification 5 en tout ou partie, et piloté par l'unité de calcul 7.

Un autre périphérique est un dispositif d'entrée-sortie 13 tel qu'une souris ou un clavier, connecté à l'unité de calcul 7 et permettant à l'opérateur d'envoyer un signal de reconnaissance de numéros d'identification.

Enfin, un autre périphérique est un dispositif de communication fixe 14, permettant d'échanger avec l'unité de calcul 7 des numéros d'identification qui sont soit envoyés soit reçus.

Le dispositif selon l'invention comprend en outre des boucles électroniques 15, conformées pour être mécaniquement attachées chacune de manière permanente à un animal respectif, et comportant une mémoire de boucle 16 et un dispositif de communication embarqué 17 permettant une écriture et une lecture à distance du contenu de la mémoire de boucle 16 en coopération avec le dispositif de communication fixe 14. On peut prévoir par exemple entre le dispositif de communication fixe 14 et le dispositif de communication embarqué 17 une liaison par ondes électromagnétiques 18.

Le dispositif de communication fixe 14 peut recevoir de l'unité de calcul 7 les signaux relatifs à un numéro d'identification, et les transmettre au dispositif de communication embarqué 17 qui enregistre alors le numéro d'identification dans la mémoire de boucle 16. De même, le dispositif de communication fixe 14 peut provoquer la lecture du numéro d'identification enregistré dans la mémoire de boucle 16, et l'envoyer à l'unité de calcul 7.

Le programme enregistré dans la mémoire centrale 11 est adapté pour piloter l'unité de calcul 7 et ses périphériques 8, 10, 12, 13 et 14 selon une suite d'étapes comprises dans un procédé global de traçage d'animaux.

Dans ce procédé global de traçage d'animaux, chaque animal destiné à l'abattoir porte au moins une étiquette d'identification telle que l'étiquette normalisée illustrée sur la figure 3, qui lui est attachée et qui contient notamment le numéro d'identification écrit en clair sous forme lisible, et dont les quatre derniers chiffres 4 sont écrits en plus gros caractères pour être lisibles de manière certaine malgré les dégradations successives que subit l'étiquette au cours de la vie de l'animal. La suite des quatre derniers chiffres en gros caractères forme le numéro de travail qui est la base habituelle du tri. Chaque animal est également associé à un document d'accompagnement (DAB) qui contient notamment le même numéro d'identification écrit en clair et écrit sous forme lisible telle qu'un code à barres pour une lecture par un dispositif d'entrée 8 à lecture automatique.

Dans le centre d'allotement, on attache à chaque animal une boucle électronique 15 qui permet l'écriture et la lecture à distance du numéro d'identification.

Le dispositif d'entrée 8 est de préférence adapté pour recevoir une pile de documents d'accompagnement 9, pour les présenter mécaniquement un à un à un dispositif de lecture optique de code à barres, et pour lire les numéros d'identification un à un et les envoyer en séquence à l'unité de calcul 7 qui les enregistre en séquence dans la mémoire de tri 10. Le programme enregistré dans la mémoire centrale 11 contient une séquence de vérification qui détecte les mauvaises lectures et provoque, en sortie du dispositif de lecture 8, le rassemblement des documents d'accompagnement à lecture défectueuse dans un lot à lecture défectueuse 19. La séquence de vérification signale en outre les numéros d'identification qui comportent les mêmes suites de quatre derniers chiffres, de façon que l'opérateur puisse en effectuer un tri manuel spécifique.

L'unité de calcul 7 affiche sur le dispositif de visualisation 12 la suite des numéros d'identification 5, en tout ou partie, de préférence de façon ordonnée en fonction des nombres formés par la suite des quatre derniers chiffres de chaque numéro d'identification. Ainsi, sur la figure 2, on remarque que les numéros d'identification 5 sont affichés en entier et listés dans l'ordre croissant des nombres formés par les suites de quatre derniers chiffres de numéro d'identification.

On présente les animaux à trier un à un dans un portique, étant observé que les animaux portent les étiquettes normalisées 1 à lecture visuelle telles qu'illustrées sur la figure 3, et portent en outre la boucle électronique 15. Un opérateur identifie visuellement les quatre derniers chiffres du numéro d'identification porté sur l'étiquette d'identification 1 de l'animal, et consulte la liste des numéros d'identification affichée sur le dispositif de visualisation 12, pour repérer le numéro d'identification qui comprend la même suite de quatre derniers chiffres que celle qu'il vient de lire sur l'étiquette d'identification 1. A l'aide du dispositif d'entrée-sortie 13, l'opérateur sélectionne sur le dispositif de visualisation 12 le numéro d'identification comportant la même suite de quatre derniers chiffres. Le programme enregistré dans la mémoire centrale assure alors l'effacement du numéro d'identification sélectionné dans la mémoire de tri 10, et provoque l'enregistrement de ce numéro d'identification complet dans la boucle électronique 15 attachée au même animal. A partir de ce moment, l'animal peut être suivi par lecture de la boucle électronique 15. Cette lecture peut se faire de manière certaine par des dispositifs de lecture automatique à distance, de sorte qu'on évite les risques de lecture défectueuse et qu'on réduit les risques d'accident éventuels dus aux mouvements de l'animal.

Le dispositif d'entrée 8 peut être adapté pour lire le lot d'entrée de documents d'accompagnement 9, et pour trier les documents d'accompagnement en sortie de lecture en plusieurs lots comprenant le lot de documents d'accompagnement à lecture défectueuse 19 et plusieurs lots de sortie 20 et 21 de documents d'accompagnement choisis par l'opérateur.

La présente invention n'est pas limitée aux modes de réalisation qui ont été explicitement décrits, mais elle en inclut les diverses variantes et généralisations contenues dans le domaine des revendications ci-après.

## Revendications

1. Procédé de traçage d'animaux de boucherie, dans lequel chaque animal destiné à l'abattoir porte au moins une étiquette d'identification (1) qui lui est attachée et qui contient notamment un numéro d'identification (5) écrit en clair sous forme lisible, et chaque animal est associé à un document d'accompagnement (9) qui contient notamment ledit numéro d'identification (5) écrit en clair et écrit sous forme qui peut être lue par un dispositif de lecture automatique, **caractérisé en ce qu'**il comprend les étapes suivantes :
a) on attache à chaque animal une boucle électronique (15) permettant une écriture et une lecture à distance du numéro d'identification (5),
b) on lit les numéros d'identification (5) des documents d'accompagnement (DAB) (9) reçus et on les enregistre dans une mémoire de tri (10) en signalant les éventuels doublons de nombres formés par les suites de quatre derniers chiffres,
c) on présente les animaux à trier un à un,
d) on identifie visuellement les quatre derniers chiffres du numéro d'identification porté par l'étiquette d'identification (1) de l'animal,
e) on établit une correspondance avec l'un des numéros d'identification enregistrés dans la mémoire de tri (10),
f) en cas de correspondance, on enregistre le numéro d'identification complet dans la boucle électronique (15) attachée à l'animal, et on efface ce numéro dans la mémoire de tri (10).

2. Procédé selon la revendication 1, **caractérisé en ce que**, pour établir la correspondance, on visualise sur un dispositif de visualisation (12) une liste ordonnée des nombres formés par les suites de quatre derniers chiffres des numéros d'identification enregistrés dans la mémoire de tri (10), et on sélectionne la suite de quatre derniers chiffres qui est identique à la suite identifiée sur l'étiquette d'identification (1) de l'animal.

3. Dispositif de traçage d'animaux de boucherie, pour la mise en oeuvre d'un procédé selon l'une des revendications 1 ou 2, **caractérisé en ce qu'**il comprend :
- un dispositif d'entrée (8) des numéros d'identification lus sur les documents d'accompagnement (9),
- une mémoire de tri (10) pour enregistrer une liste de numéros d'identification,
- un dispositif de visualisation (12) pour afficher des numéros d'identification en tout ou partie,
- un dispositif d'entrée-sortie (13) pour communiquer un signal de reconnaissance de numéros d'identification,
- une unité de calcul (7) connectée au dispositif de lecture (8), à la mémoire de tri (10), au dispositif de visualisation (12) et au dispositif d'entrée-sortie (13),
- des boucles électroniques (15), conformées pour être mécaniquement attachées chacune de manière permanente à un animal respectif, et comportant une mémoire de boucle (16) et un dispositif de communication embarqué (17) permettant une écriture et une lecture à distance du contenu de la mémoire de boucle (16),
- un dispositif de communication fixe (14), adapté pour recevoir de l'unité de calcul (7) les signaux relatifs à un numéro d'identification et pour les transmettre au dispositif de communication embarqué (17) pour enregistrer ledit numéro d'identification dans la mémoire de boucle (16),
- une mémoire centrale (11), connectée à l'unité de calcul (7), et contenant un programme qui pilote l'unité de calcul (7) et ses périphériques (8, 10, 11, 12, 13, 14) selon ledit procédé.

4. Dispositif selon la revendication 3, **caractérisé en ce que** le programme affiche sur le dispositif de visualisation (12) une liste ordonnée des nombres formés par les suites de quatre derniers chiffres des numéros d'identification enregistrés en mémoire de tri (10), permet de déplacer à l'aide du dispositif d'entrée-sortie (13) un curseur virtuel sur l'un des nombres de la liste ordonnée, et permet de sélectionner ledit nombre pour provoquer son effacement de la liste et son enregistrement dans la mémoire de boucle (16).

5. Dispositif selon l'une des revendications 3 ou 4, **caractérisé en ce qu'**il comprend en outre un dispositif d'entrée (8) à lecture automatique des documents d'accompagnement (9), communiquant à l'unité de calcul (7) les numéros d'identification lus à enregistrer dans la mémoire de tri (10).

6. Dispositif selon la revendication 5, **caractérisé en ce que** le dispositif d'entrée (8) effectue la lecture optique des numéros d'identification sous forme de code à barres.

7. Dispositif selon l'une des revendications 5 ou 6, **caractérisé en ce que** le dispositif d'entrée (8) est adapté pour lire un lot d'entrée de documents d'accompagnement (9) et pour trier les documents d'accompagnement en sortie de lecture en un lot de documents d'accompagnement à lecture défectueuse (19) et plusieurs lots de sortie (20, 21) de documents d'accompagnement choisis par l'opérateur.
